# EUROPEAN PATENT APPLICATION

(11) **EP 4 180 310 A1**
(43) Date of publication of application: **17.05.2023**
(21) Application number: 21207512.1
(22) Date of filing: 10.11.2021
(51) Int. Cl.: B62K 21/18

(54) **SYSTEM FOR FIXING A BICYCLE FORK TO A STEM**

(71) Applicant: F.I.V. Fabbrica Italiana Velocipedi Edoardo Bianchi S.p.A., 24047 Treviglio (BG) (IT)
(72) Inventor: Borgonovo, Marco, 24047 Treviglio (IT)
(74) Representative: AWA Sweden AB

(57) **Abstract**

The present invention relates to a system (10) for fixing a bicycle fork (12) to a stem (14), wherein the system comprises: a bicycle fork steerer tube (16); an insert (32) having a hole (34) extending from a first end (36a) of the insert toward a second end (36b) of the insert, wherein the insert is partly inserted into the steerer tube at an end (28) of the steerer tube such that the second end is situated inside the steerer tube and such that the first end is situated outside the steerer tube, wherein the hole has an internal threading (38) at the first end of the insert; and a spacer member (60) attached by a fastening member (62) having an external threading (64) engaging the internal threading at the first end of the insert, wherein the spacer member on the opposite side of the spacer member compared to the steerer tube has a mounting surface (66), and wherein the mounting surface is configured to allow mounting of a stem (14) on the mounting surface.

## Description

### Technical field

The present invention relates to a system for fixing a bicycle fork to a stem. The present invention also relates to a bicycle comprising such a system.

### Background

The stem is generally a component on a bicycle that connects the handlebars to the steerer tube of the bicycle fork.

There are two conventional types: quill (or "threaded") stems and threadless stems. The latter is newer and is the type mostly used on sport bikes. A threadless stem conventionally clamps around the outside of the top of the steerer tube that protrudes above the headset and the head tube of the bicycle frame. Typically, a star nut or similar is driven down into the threadless steerer tube and acts like an anchor. A bolt in the top cap connects to, and pulls against, the star nut, whereby the headset bearings are preloaded.

Another way for connecting the front wheel and handlebars to the frame of a wheeled vehicle, such as a bicycle, is disclosed in EP0479138 A1. In EP0479138 A1, a steerer tube passes through the head tube and through a connector on one end of a stem, wherein the connector is clamped to the steerer tube with a pair of bolts. The upper end of the steerer tube in has internal threads. An adjuster nut, having external threads, is threaded into the upper end of the steerer tube. The adjuster nut has a head that contacts the upper end of the connector on the stem, and forces the connector downward on the steerer tube. In turn, the connector exerts a downward force on the upper surface of a compression ring located above the upper bearing assembly.

### Summary of the invention

It is an object of the present invention to provide an improved system for fixing a bicycle fork to a stem.

According to a first aspect of the present invention, this and other objects are achieved by a system for fixing a bicycle fork to a stem, wherein the system comprises: a bicycle fork steerer tube; an insert having a hole extending from a first end of the insert toward a second end of the insert, wherein the insert is partly inserted into the steerer tube at an end of the steerer tube such that the second end of the insert is situated inside the steerer tube and such that the first end of the insert is situated outside the steerer tube, wherein the hole has an internal threading at the first end of the insert; and a spacer member attached by a fastening member, wherein the fastening member has an external threading engaging the internal threading at the first end of the insert, wherein the spacer member on the opposite side of the spacer member compared to the steerer tube has a mounting surface, and wherein the mounting surface is configured to allow mounting of a stem on the mounting surface, either directly or via at least one intermediate spacer.

The present invention is at least partly based on the understanding that by using an insert, which can be made of a metallic material, the present system is readily applicable to a carbon steerer tube. Furthermore, the insert, along with the spacer member's (top) mounting surface for the stem, allows for convenient and complete internal cable routing. The insert may also allow headset compression.

It should be noted that AU199881935 A1 does disclose a front fork with an integral post made from fibrous material (e.g. carbon fibre) impregnated with resin, wherein a steel or alloy barrel is positioned and bonded into the upper part of the post. However, AU199881935 A1 at least fails to disclose an internal threading at said first end of the insert, as well as a spacer member which on its opposite side compared to the steerer tube has a mounting surface configured to allow mounting of a stem. Contrary, the stem in AU199881935 A1 appears to clamp around the outside of the top of the integral post in a conventional manner.

Furthermore, US10293879 does disclose a fork assembly including a fork top which is rigidly connectable to a junction portion of a V-shaped stem. However, the fork assembly in US10293879 is a so-called bayonet-style fork assembly, without any steerer tube and also no insert or fastening member as in the present invention.

The fastening member of the present system may have a head that contacts a section of the mounting surface of the spacer member and forces the spacer member in a direction towards the steerer tube, said section of the mounting surface surrounding a through hole of the spacer member, which through hole accommodates a portion of the insert including said first end of the insert. The fastening member may also be a hollow fastening member. The fastening member may for example be a nut with external threading and a head, or a (relatively short and wide) bolt with a longitudinal (relatively wide) through hole. Furthermore, the insert may have a side opening in connection with said hole of the insert such that at least one cable is allowed to pass through the hollow fastening member, into the hole of the insert, and (sideways) out from the insert through said side opening. The side opening is preferably a rear opening (with respect to an intended direction of travel of the bicycle), whereby the at least one cable conveniently can be further routed into a top tube or a down tube of the bicycle's frame. The at least one cable can for example include a gear cable to a front or rear derailleur of the bicycle and/or a brake wire or hose to a rear brake of the bicycle and/or at least one electric wire.

Said hole of the insert may be a through hole extending from the first end of the insert to the second end of the insert. In this way, (also) a cable to a front brake of the bicycle can be internally routed.

The bicycle fork steerer tube, the hole of the insert, the though hole of the spacer member, and a through hole of the hollow fastening member may all be aligned with a common axis. This may facilitate internal cable routing.

The steerer tube can be made from a carbon fibre material, such as carbon fibre reinforced polymer or carbon fiber reinforced plastic or carbon fiber reinforced thermoplastic (or just carbon). The insert can be made of a metallic material, for example AI6061 (6061 aluminium alloy). The insert can be glued to the steerer tube.

The steerer tube can at said end of the steerer tube have an oval cross-section. The oval cross-section is preferably a stadium-shaped cross-section. An oval steerer tube can have an improved stiffness compared to a round steerer tube with respect to brake forces, which in turn can make braking performance better and more predictable. To this end, the insert may have a first portion outside the steerer tube and a second portion inside the steerer tube, wherein the first portion includes the internal threading and has a circular cross-section, and wherein the second portion of the inserted has an oval (e.g. stadium-shaped) outer surface matching the inside of the oval cross-section of the steerer tube. The insert can hence conveniently act as a converter from the stiff oval steerer tube to a circular shape needed to match an upper bearing assembly.

The mounting surface of the spacer member may be a top mounting surface for top-mounting of the stem. The mounting surface may have a plurality of screw holes for mounting of the stem using screws. The mounting surface may also include recesses and/or projections configured to mate with complementary recesses and/or projections of the stem or of the intermediate spacer.

According to a second aspect of the present invention, there is provided a bicycle comprising a system according to the first aspect. The bicycle may for example be a (road) racing bike.

The bicycle may comprising a frame with a head tube, wherein the bicycle fork steerer tube of said system is arranged in the head tube, wherein a stem connected to or integrated with a handlebar is mounted to the spacer member of said system, either directly or via at least one intermediate spacer, wherein the fastening member of said system is a hollow fastening member, wherein the insert of said system has a rear opening in connection with the hole of the insert, which rear opening is positioned above the end of the steerer tube, and wherein at least one cable from the handlebar passes though the stem and the hollow fastening member, into the hole of the insert, out from the insert through said rear opening, and into (for example a down tube of) said frame.

### Brief description of the drawings

These and other aspects of the present invention will now be described in more detail, with reference to the appended drawings showing currently preferred embodiments of the invention.
Fig. 1 is an exploded perspective view of a system according to the present invention.
Fig. 2 is an exploded perspective view (like fig. 1) schematically illustrating cable routing.
Fig. 3 is a cross-sectional side view of the present system.
Fig. 4 is a side view of a bicycle comprising the present system.

### Detailed description of the invention

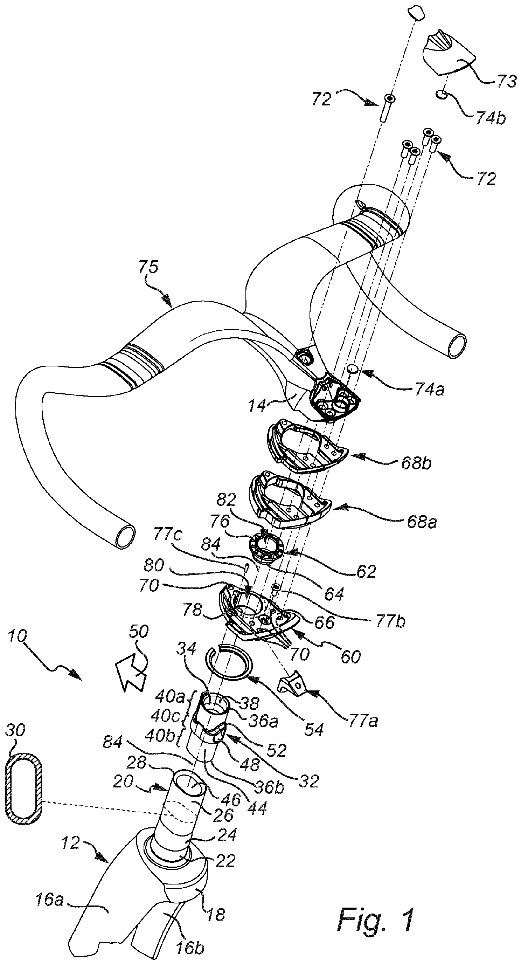

Fig. 1 shows a system 10 for fixing a bicycle (front) fork 12 to a stem 14.

The bicycle fork 12 comprises two fork blades 16a-b joined by a fork crown 18. A (bicycle fork) steerer tube 20 of the system 10 extends generally upwards from the fork crown 18. The fork blades 16a-b, fork crown 18, and steerer tube 20 can all be made of carbon. The fork blades 16a-b, fork crown 18, and steerer tube 20 of the bicycle fork 12 can be manufactured as a single piece.

The steerer tube 20 can have a lower portion 22, an intermediate portion 24, and an upper portion 26. The lower portion 22 is next to the fork crown 18 and can include a circular cylindrical external surface. The intermediate portion 24 can taper from the lower portion 22 to the upper portion 26. The upper portion 26, which extends from the intermediate portion 24 to an (upper) end 28 of the steerer tube 20, can have an oval cross-section 30 throughout its length from the intermediate portion 24 to the upper end 28 of the steerer tube 20. The oval cross-section 30 can be a stadium-shaped cross-section, as illustrated in fig. 1. The steerer tube 20 is described in more detail in applicant's co-pending application "BICYCLE FORK STEERER TUBE", the content of which herein is incorporated by reference.

The system 10 further comprises an insert 32. The insert has a hole 34 extending from a first (upper) end 36a of the insert 32 towards a second (lower) end 36b of the insert 32, which second end 36b is opposite the first end 36a. Here, the hole 34 is a (longitudinal or axial) through hole extending from the first end 36a all the way to the second end 36b of the insert 32. The hole 34 has an internal threading 38 at the first end 36a of the insert 32.

The insert 32 is partly inserted into the steerer tube 20 at the upper end 28 of the steerer tube 20. The insert 32 is inserted such that its second (lower) end 36b is situated inside the steerer tube 20 and such that its first (upper) end 36a is situated outside the steerer tube 20.

Specifically, the insert 32 can have a first upper (longitudinal) portion 40a outside the steerer tube 20 and a second lower (longitudinal) portion 40b inside the steerer tube 20. The first portion 40a may have a circular cross-section. The first portion 40a may also include the aforementioned internal threading 38. The second portion 38b may have an oval outer surface 44 matching the inside 46 of the oval cross-section 30 of the upper portion 26 of the steerer tube 20.

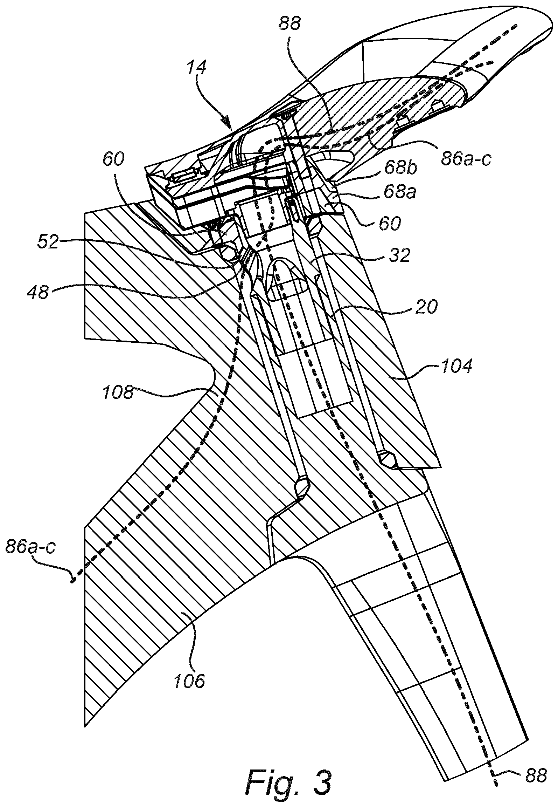

The insert 32 will typically have a side opening 48 in connection with the (through) hole 34 of the insert 32. The side opening 48 is preferably a rear opening with respect to an intended forward direction of travel indicated by arrow 50. The side/rear opening 48 may be provided in an intermediate portion 40c of the insert 32, which intermediate portion 40c is located between the first and second portions 40a-b and positioned (just) above the upper end 28 of the steerer tube 20. Furthermore, the intermediate portion 40c may have a(n upper) ledge 52, for example as shown in figs. 1 fig. 3.

The insert 32 can be made of a metallic material, such as Al6061. The insert 32 can be glued to the steerer tube 20. Preferably, the inside 42 of the oval cross-section 30 of the upper portion 26 of the steerer tube 20 can have recesses (not shown) to facilitate the gluing.

The system 10 further comprises a spacer member 60. The spacer member 60 could also be referred to as a lower spacer. The spacer member 60 is attached to the insert 32 by a fastening member 62. The fastening member 62 may have an external threading 64 engaging the internal threading 38 of the insert 32, as will be discussed further below. Namely, the spacer member 60 may be located on (the ledge 52 of) the insert 32 and fixed due to the fastening member 62.

Item 54 shown between spacer member 60 and insert 32 in fig, 1 is a head set base ring.

On its top, i.e. on the opposite side of the spacer member 60 compared to the steerer tube 20, the spacer member 60 has a (top) mounting surface 66. The mounting surface 66 is configured to allow (top-)mounting of the stem 14, either directly on the mounting surface 66 or via at least one intermediate spacer. In fig. 1, the at least one intermediate spacer consists of a first intermediate spacer 68a (exemplary height 10 mm) and a second intermediate spacer 68b (exemplary height 5 mm). The mounting surface 66 may have a plurality of screw holes 70 for mounting of the stem using screws 72. The mounting surface 66 may for example have four rear screw holes in a rectangular configuration and one front screw hole. The mounting surface 66 may also include recesses and/or projections configured to mate with complementary recesses and/or projections of the stem 14 or of the intermediate spacer 68a. The (top of the) screws 72 can be covered by a top cap cover 73. The top cap cover 73 can be attached to the stem 14 using magnets 74a-b. Furthermore, the spacer member 60 may comprise a stem slider 77a fixed by a stem slider screw 77b. Item 77c is a headless screw.

The illustrated stem 14 is integrated with a handlebar 75, namely a drop handlebar. The handlebar 75 is here shown with a V-type design, including wing-shaped handlebar sections extending from the stem 14, but other handlebar designs are envisaged as well. Alternatively, the stem and handlebar could be separate items, with the stem connected to the handlebar by conventional means.

Moving on, the fastening member 62 may have a head 76. The head 76 contacts a section 78 of the spacer member's mounting surface 66 and forces (when the fastening member 62 is/has been turned) the spacer member 60 downwards, in a direction towards the steerer tube 20, so that the underside of the spacer member 60 abuts the ledge 52 of the insert 32, see fig. 3. Hence, the spacer member 60 attached by the fastening member 62 sits (like a washer) between the head 76 of the fastening member 62 and ledge 52 of the insert 32.

The aforementioned section 78 of the mounting surface 66 may be a circular section surrounding an axial through hole 80 of the spacer member 60. The through hole 80 of the spacer member 60 may accommodate the first upper portion 40a of the insert 32. The fastening member 62 may also comprise an axial through hole 82, rendering it a hollow fastening member 62. The fastening member 62 may for example be a nut with external threading 64 and head 76. As seen in fig. 1, the steerer tube 20, the (through) hole 34 of the insert 32, the though hole 80 of the spacer member 62, and the through hole 82 of the fastening member 62 may all be aligned with a common axis 84. In other words, the steerer tube 20, the (through) hole 34 of the insert 32, the though hole 80 of the spacer member 62, and the through hole 82 of the fastening member 62 may be co-axially arranged.

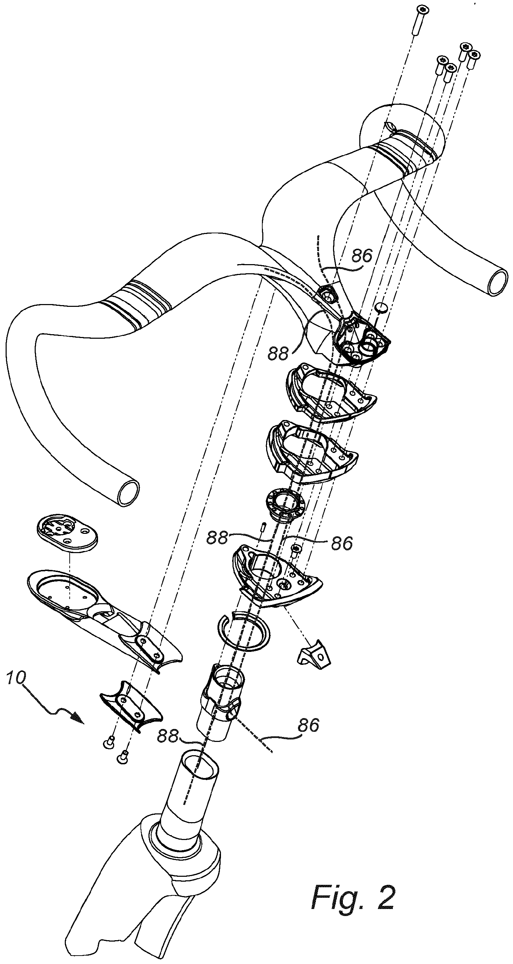

A great advantage of the present system 10 is that is allows for internal cable routing. For example, as shown in fig. 2, at least one cable 86 from the handlebar 75 may pass inside the integrated stem 14 and through the through hole 82 of the fastening member 62, into the hole 34 of the insert 32, and aft out from the insert 32 through the rear opening 48. The at least one cable 86 can for example include one or more of: a gear cable to a front derailleur, a gear cable to a rear derailleur, a brake wire or hose to a rear brake, and at least one electric wire (e.g. for electronic shifting, control of an electric motor, etc.).

Furthermore, another cable 88 from the handlebar 75 may pass inside the integrated stem 14, down through the through hole 82 of the fastening member 62 as well as the through hole 34 of the insert 32, and out from the insert 32 at the lower end 36b. The another cable 88 can for example be a brake wire or hose to a front brake.

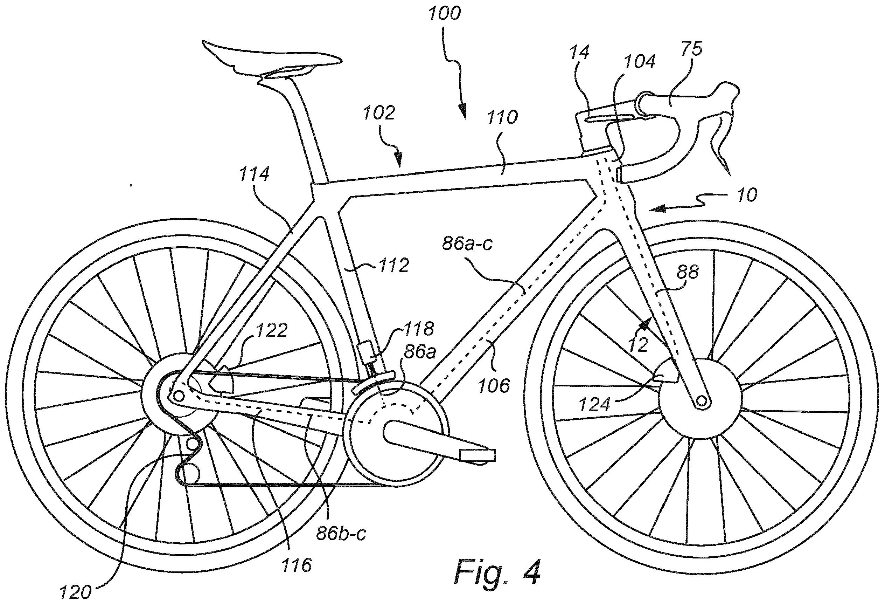

Turning to fig. 4, fig. 4 shows a bicycle 100 comprising the present system 10. The bicycle 100 may for example be a road racing bike.

Apart from the already mentioned components of, and related to, system 10, the bicycle 100 comprises a frame 102 with a head tube 104 connected to a down tube 106. An internal opening illustrated schematically by 108 in fig. 3 is present between the head tube 104 and the down tube 106. The frame 102 also has a top tube 110, a seat tube 112, seat stays 114, and chain stays 116. Like the front fork 12, the frame 102 can be made from a carbon fibre material.

As applied to the bicycle 100, and with further reference to fig. 3, the steerer tube 20 of system 10 is arranged in the head tube 104. The spacer member 60 is attached to the insert 32 and positioned above the head tube 104. The stem 14 (integrated with handlebar 75) is mounted to the spacer member 60, here via intermediate spacers 68a-b. The rear opening 48 of the insert 32 is positioned above the upper end 28 of the steerer tube 20, but below the spacer member 60.

Furthermore, cables 86a-c from the handlebar 75 passes though the stem 14 and the hollow fastening member 62, into the hole 34 of the insert 32, out from the insert 32 through the rear opening 48, into the down tube 106 via internal opening 108, and further to front derailleur 118, rear derailleur 120, and rear brake 122, respectively. Another cable 88 from the handlebar 75 passes though the stem 14 and the hollow fastening member 62, into the hole 34 of the insert 32, out from the insert 32 at the at the lower end 36b, and further to front brake 124.

The bicycle 100 may further comprise two wheels, pedals, seat and post, an electric motor and battery pack (in case the bicycle 100 is an electric bicycle), etc.

The person skilled in the art realizes that the present invention by no means is limited to the embodiments described above. On the contrary, many modifications and variations are possible within the scope of the appended claims. For example, the present system 10 could alternatively be used with other, more conventional, steerer tubes than steerer tube 20.

## Claims

1. A system (10) for fixing a bicycle fork (12) to a stem (14), wherein the system comprises:
a bicycle fork steerer tube (20);
an insert (32) having a hole (34) extending from a first end (36a) of the insert toward a second end (36b) of the insert, wherein the insert is partly inserted into the steerer tube at an end (28) of the steerer tube such that the second end of the insert is situated inside the steerer tube and such that the first end of the insert is situated outside the steerer tube, wherein the hole has an internal threading (38) at the first end of the insert; and
a spacer member (60) attached by a fastening member (62), wherein the fastening member has an external threading (64) engaging the internal threading at the first end of the insert, wherein the spacer member on the opposite side of the spacer member compared to the steerer tube has a mounting surface (66), and wherein the mounting surface is configured to allow mounting of a stem (14) on the mounting surface, either directly or via at least one intermediate spacer (68a, 68b).

2. A system according to claim 1, wherein the fastening member has a head (76) that contacts a section (78) of the mounting surface (66) of the spacer member and forces the spacer member in a direction towards the steerer tube, said section (42) of the mounting surface surrounding a through hole (80) of the spacer member, which through hole accommodates a portion of the insert including said first end (36a) of the insert.

3. A system according to claim 1 or 2, wherein the fastening member is a hollow fastening member.

4. A system according to claim 3, wherein the insert has a side opening (48) in connection with said hole (34) of the insert (32) such that at least one cable (86) is allowed to pass through the hollow fastening member, into the hole of the insert, and out from the insert through said side opening.

5. A system according to any one of the preceding claims, wherein said hole (34) of the insert (32) is a through hole extending from the first end of the insert to the second end of the insert.

6. A system according to claims 1-3, wherein the bicycle fork steerer tube (20), the hole (34) of the insert, the though hole (80) of the spacer member, and a through hole (82) of the hollow fastening member are aligned with a common axis (84).

7. A system according to any one of the preceding claims, wherein the steerer tube is made from a carbon fibre material.

8. A system according to any one of the preceding claims, wherein the insert is made of a metallic material.

9. A system according to any one of the preceding claims, wherein the insert is glued to the steerer tube

10. A system according to any one of the preceding claims, wherein the steerer tube at said end of the steerer tube has an oval cross-section.

11. A system according to claim 10, wherein the insert has a first portion (40a) outside the steerer tube and a second portion (40b) inside the steerer tube, wherein the first portion includes the internal threading (38) and has a circular cross-section, and wherein the second portion of the inserted has an oval outer surface (44) matching the inside (46) of the oval cross-section of the steerer tube.

12. A system according to any one of the preceding claims, wherein said mounting surface of the spacer member is a top mounting surface (66) for top-mounting of the stem.

13. A system according to any one of the preceding claims, wherein said mounting surface has a plurality of screw holes (70) for mounting of the stem using screws.

14. A bicycle (100) comprising a system (10) according to any one of the preceding claims.

15. A bicycle according to claim 14, comprising a frame (102) with a head tube (104), wherein the bicycle fork steerer tube (20) of said system is arranged in the head tube, wherein a stem (14) connected to or integrated with a handlebar (75) is mounted to the spacer member (60) of said system, either directly or via at least one intermediate spacer (68a, 68b), wherein the fastening member (62) of said system is a hollow fastening member, wherein the insert of said system has a rear opening (48) in connection with the hole (34) of the insert, which rear opening is positioned above the end (28) of the steerer tube, and wherein at least one cable (86) from the handlebar passes though the stem (14) and the hollow fastening member (62), into the hole (34) of the insert, out from the insert through said rear opening (48), and into said frame.
